# FASCICULE DE BREVET EUROPEEN

(11) **EP 2 088 374 B1**
(45) Date de publication et mention de la délivrance du brevet: **18.08.2010**
(21) Numéro de dépôt: 09152613.7
(22) Date de dépôt: 11.02.2009
(51) Int. Cl.: F23R 3/60, F02C 7/266

(54) **Dispositif de montage d'une bougie d'allumage dans une chambre de combustion de moteur à turbine à gaz**
Montageanordnung einer Zündkerze in einer Brennkammer eines Gasturbinenmotors
Device for mounting a spark plug in a combustion chamber of a gas turbine engine

(30) Priorité: 11.02.2008 FR 0800712
(43) Date de publication de la demande: 12.08.2009
(73) Titulaire: SNECMA, 75015 Paris (FR)
(72) Inventeur: Pieussergues, Christophe, 77370 Nangis (FR); Sandelis, Denis Jean Maurice, 77370 Nangis (FR)
(74) Mandataire: Bloch & Bonnétat

(56) Documents cités:
- EP-A- 1 258 682
- EP-A- 1 489 360
- EP-A- 1 770 332

## Description

La présente invention concerne le domaine des moteurs à turbine à gaz et porte plus particulièrement sur l'amélioration du montage d'une bougie d'allumage dans une chambre de combustion.

Dans un moteur à turbine à gaz, la chambre de combustion reçoit l'air du compresseur dont une partie est mélangée au carburant qui est brûlé dans la zone de combustion primaire. L'allumage est assuré par une ou deux bougies disposées en aval du système de carburation. Une autre partie de l'air contourne la zone de combustion primaire et vient se mélanger aux gaz de combustion. L'ensemble des gaz chauds est dirigé vers la turbine. Les chambres de combustion sont étudiées pour répondre à un certain nombre de spécifications impératives telles que : le rallumage en vol, la forme du profil de température, les émissions de gaz polluants ainsi que la tenue à la fois thermique et mécanique de ses différents composants.

En particulier le système d'allumage doit assurer le rallumage en vol en cas d'extinction accidentelle de la chambre de combustion tout en supportant et en résistant aux contraintes thermiques auxquelles il est soumis. Ces deux conditions impliquent des dispositions difficilement compatibles. En effet le système d'injection produit une nappe de carburant pulvérisé formant un certain angle. Si ce dernier est très fermé, la bougie est en dehors du cône formé par le carburant ; cela est favorable du point de vue de la tenue thermique mais les capacités d'allumage de la chambre sont réduites. Inversement un système d'injection dont la nappe de carburant forme un cône très ouvert provoque un échauffement important de la zone de la chambre environnant la bougie en raison de l'impact du carburant sur les parois et la bougie. La tenue thermique de ces éléments s'en trouve affectée.

La présente invention concerne les systèmes d'allumage dont la bougie est montée sur la chambre par l'intermédiaire d'une pièce formant adaptateur elle-même fixée sur le carter de la chambre. La bougie s'étend depuis le carter radialement vers l'intérieur de la chambre et son extrémité vient affleurer la paroi de la chambre au travers d'une ouverture ménagée dans celle-ci et formant cheminée. Un jeu latéral minimum est ménagé autour de la bougie pour autoriser les déplacements relatifs entre la chambre et le carter résultant des variations de température pendant les différentes phases de vol sans que la bougie, solidaire du carter, ne vienne buter ou s'appuyer contre les bords de l'ouverture dans la paroi de la chambre. L'ouverture dans la paroi de chambre forme une cheminée dans laquelle la bougie est glissée et une douille de bougie flottante cerclant la bougie assure l'étanchéité entre la chambre et l'espace entre celle-ci et le carter. Un exemple de ce type de montage de bougie dans une chambre de combustion avec adaptateur est représenté dans la demande de brevet EP 1.443.190 ou dans la demande de brevet EP 1.489.360.

Une bougie dont l'extrémité rentre trop dans la chambre de combustion est exposée à des problèmes thermiques. Ces problèmes thermiques risquent de provoquer le mauvais fonctionnement du moteur et surtout une destruction plus rapide de la bougie. A contrario, si une bougie est trop en retrait par rapport à la paroi de la chambre, les performances d'allumage sont dégradées. D'où la nécessité d'optimiser l'immersion de l'extrémité de la bougie par rapport à la paroi.

L'état de l'art fait que l'axe de la bougie reste toujours perpendiculaire à l'axe de la chambre, il n'y a donc pas de possibilité pour la bougie de compenser les dilatations axiales et radiales de la chambre.

L'objet de l'invention est de proposer un système qui permet à la bougie d'avoir un degré de liberté supplémentaire pour éviter les usures sur la bougie et de déplacer les points d'usures sur une pièce qui est facile à réparer et ainsi améliorer la durée de vie de la bougie.

Le présent déposant s'est fixé comme objectif de proposer une amélioration du dispositif de montage d'une bougie d'allumage dans une chambre de combustion, pour lequel les points d'usures sont déplacés au-delà de la bougie, facilitant ainsi la réparation sans pour cela changer la bougie.

Conformément à l'invention, le dispositif de montage d'une bougie d'allumage dans une chambre de combustion de moteur à turbine à gaz comprise dans un carter, dans lequel la chambre de combustion ayant un axe YY, le dispositif de montage comprenant une cheminée d'axe XX, une douille de bougie flottante permettant une reprise de dilatation selon un axe perpendiculaire à l'axe XX, est caractérisé par le fait qu'il comporte en outre une douille de cheminée, telle que la douille de bougie est logée dans ladite douille de cheminée, et des moyens d'inclinaison de ladite douille de cheminée par rapport à l'axe XX , l'inclinaison de la douille de cheminée permettant une inclinaison de la chambre par rapport à l'axe de la bougie.

Plus particulièrement les moyens d'inclinaison comportent deux barrettes diamétralement opposées sur le fond de la cheminée sur lesquelles repose la douille de cheminée. Les deux barrettes forment un axe de rotation perpendiculaire au plan formé par l'axe de la cheminée et l'axe de la chambre.

Conformément à une autre caractéristique, la douille de cheminée comporte deux disques parallèles entre eux formant une glissière pour la douille de bougie. Plus particulièrement les deux disques sont reliés par une paroi cylindrique avec une surface extérieure en portion de sphère guidée à l'intérieur d'une paroi de la cheminée.

Conformément à un autre mode de réalisation de l'invention, le dispositif comporte des moyens d'inclinaison de la douille de cheminée, caractérisé par le fait que la douille de cheminée est montée rotulante à l'intérieur de la cheminée, lui permettant une inclinaison combinée entre les plans axiaux et tangentiels de la chambre par rapport à l'axe de la bougie.

Conformément à l'invention, le dispositif comporte en outre des moyens de refroidissement de la bougie, ces moyens comportent des orifices percés dans la cheminée. La partie interne de la cheminée est convergente pour augmenter le refroidissement de la bougie.

La présente demande concerne encore un système d'allumage d'un moteur à turbine à gaz, comportant au moins un dispositif de montage de la bougie tel que présenté ci-dessus.

La présente invention concerne encore un moteur à turbine à gaz, comportant un système d'allumage avec au moins un dispositif de montage de la bougie tel que présenté ci-dessus.

On comprendra mieux les buts, aspects et avantages de la présente invention, d'après la description donnée ci-après des différents modes de réalisation, présentés à titre d'exemples non limitatifs, en se référant aux dessins annexés, dans lesquels:
La figure 1 montre en coupe longitudinale une partie de la chambre de combustion d'un moteur à turbine à gaz.
La figure 2 montre le montage de la bougie selon l'art antérieur,
La figure 3 montre, le dispositif d'allumage selon l'invention vue en coupe suivant un plan passant par l'axe YY de la chambre.
La figure 4 montre le dispositif d'allumage de la figure 3 en coupe selon la direction IV-IV.

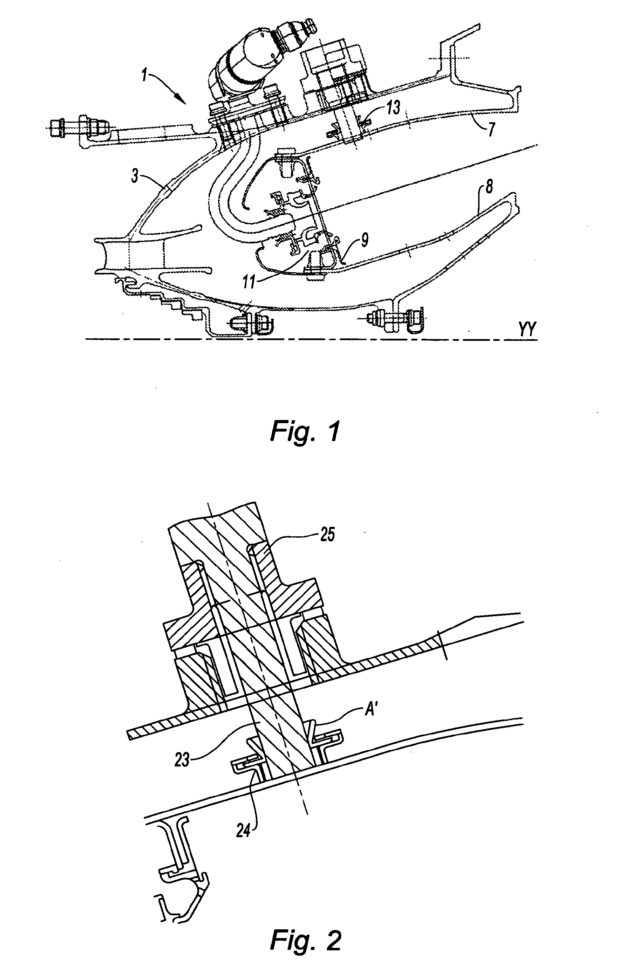

Comme on le voit sur la figure 1, la chambre de combustion 1 est contenue dans un espace annulaire formé par un carter extérieur 3. Elle comprend une ou plusieurs viroles externes 7 avec des brides ou des appuis, une ou plusieurs viroles internes 8 avec brides, un fonds de chambre 9 associés à des carénages amont. Une pluralité de cannes d'injection de carburant, réparties autour de l'axe du moteur débouchent dans le fond de chambre 9. Des déflecteurs 11 forment un bol autour de chaque tête d'injection, dévient une partie de l'air qui a pénétré dans la zone carénée en direction radiale et tourbillonnante vers le carburant pulvérisé, et assurent ainsi la formation d'un mélange de carburant avec de l'air. Une zone de combustion primaire est formée en aval du fond de chambre dans laquelle le mélange est allumé par une bougie 13 ou plusieurs réparties circonférentiellement.

En référence à la figure 2, Une bougie 23 est montée conformément à l'art antérieur sur la chambre par l'intermédiaire d'une pièce formant adaptateur 25 elle-même fixée sur le carter de la chambre. La bougie se prolonge radialement vers l'intérieur de la chambre jusqu'à affleurer la paroi de celle-ci. A son autre extrémité la bougie est guidée dans une cheminée 24. Une douille de bougie flottante A' entourant la bougie et comportant une bride radiale par rapport à celle-ci coulisse entre des surfaces de guidage correspondantes de la cheminée et assure l'étanchéité.

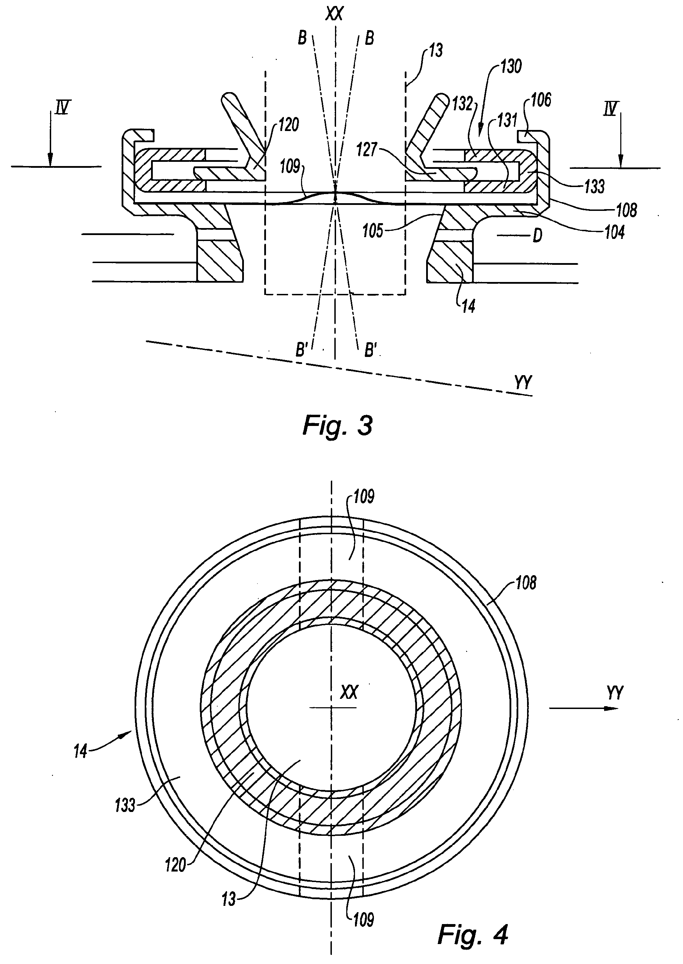

Sur la figure 3, nous avons présenté un premier mode de réalisation du dispositif de montage d'une bougie d'allumage, conformément à l'invention, vue en coupe suivant un plan passant par l'axe YY de la chambre.

Ce dispositif comprend une cheminée 14, d'axe XX, qui a été fixée sur une ouverture ménagée dans la chambre de combustion d'axe YY. Ladite cheminée est de forme cylindrique (représentée sur la figure 4) ; sa partie supérieure est d'un diamètre plus important que le reste de la cheminée de manière à former une surface plane 104, perpendiculaire à l'axe de celle-ci. Une paroi cylindrique 108 entoure la portion plane 104 et l'extrémité supérieure 106 de la cheminée 14 est conformée de façon à former une collerette perpendiculaire à l'axe XX.

Cette partie supérieure de la cheminée 14 loge une douille de cheminée 130. Cette douille de cheminée 130, en forme de disque, sert à accompagner les variations d'inclinaison de la chambre par rapport à l'axe de la bougie.

Deux barrettes 109 rectilignes à section de forme arrondie sont ménagées sur la surface plane 104 de la cheminée 14. Elles sont orientées sur le diamètre perpendiculaire à l'axe YY (tel que représenté sur la figure 4). La forme arrondie de ces barrettes 109, sur lesquelles vient reposer la douille de cheminée 130, permet à cette dernière de réaliser une inclinaison dans le plan perpendiculaire à l'axe de la bougie. La douille de cheminée 130 comprend deux disques parallèles 131 et 132 entre eux reliés par une paroi cylindrique 133 dont la surface extérieure est en forme de portion de sphère. Elle est de diamètre légèrement inférieur à celui de la paroi 108 cylindrique ce qui lui permet de rester centrée sur l'axe par rapport à la cheminée 14, lors de l'inclinaison de la chambre

A l'intérieur de la douille de cheminée 130, entre les disques supérieur et inférieur, un volume est ainsi ménagé au sein duquel vient se loger une douille de bougie 120, par l'intermédiaire d'une collerette 127 de diamètre plus petit que celui de la douille de cheminée 130. Cela permet à la douille de bougie 120 de se déplacer et de reprendre les dilatations axiales de la chambre dans le plan perpendiculaire à l'axe XX, tandis que la douille de cheminée 130 permet de reprendre les variations d'inclinaison de la chambre par rapport à l'axe de la bougie BB'. Sur la figure 3, l'axe BB' peut s'incliner par rapport à l'axe XX.

La partie supérieure de la douille de bougie 120 est de forme évasée, convergeant vers la bougie 13, tandis que la partie intérieure de ladite douille encercle la bougie.

La partie inférieure de la cheminée 14 permet d'alimenter la zone d'extrémité de la bougie en air froid. A cet effet, sur la partie inférieure de la cheminée 14, des orifices D sont percés perpendiculairement à l'axe de celle-ci. Ces orifices permettent ainsi la circulation de l'air dans la cheminée. La partie interne 105 de la cheminée 14 est conformée de façon à converger vers l'axe XX, ce qui permet d'augmenter le refroidissement de la chambre par un effet de convection.

La figure 4 montre le dispositif d'allumage de la figure 3 en coupe selon la direction IV-IV. Comme on le voit, la cheminée 14 est de forme cylindrique, tout comme la douille de cheminée 130, qui vient se loger dans ladite cheminée. La douille de bougie 120 vient s'imbriquer à l'intérieur de la douille de cheminée 130. L'espace vide cylindrique entre le diamètre extérieur de la douille de bougie 120 et la paroi 133 de la douille de cheminée 130 montre que la douille de bougie 120 possède une certaine liberté de déplacement à l'intérieur de celle-ci. Cela permet à la douille de bougie 120 de reprendre les dilatations axiales de la chambre selon un axe perpendiculaire à l'axe XX de la cheminée 14. La bougie 13 est montée dans la douille de bougie 120. Nous constatons aussi le positionnement des deux barrettes 109 rectilignes ménagées au fond de la cheminée 14 sur le diamètre perpendiculaire à l'axe YY.

Dans une deuxième forme de réalisation non représentée, les barrettes 109 ménagées sur le fond de la cheminée 14 sont supprimées, la paroi de la cheminée prend une forme sphérique de rayon légèrement supérieur à celui de la paroi de la douille de cheminée 130. La douille de cheminée 130 est ainsi montée rotulante dans la paroi sphérique de la cheminée 14, et ses bords sphériques lui permettent de glisser sur cette paroi lors de l'inclinaison de la chambre par rapport à l'axe de la bougie. Selon ce mode de réalisation la douille de cheminée 130 permet de reprendre les variations d'inclinaison combinées entre les plans axiaux et tangentiels de la chambre par rapport à l'axe de la bougie.

## Revendications

1. Dispositif de montage d'une bougie d'allumage dans une chambre de combustion (1) de moteur à turbine à gaz comprise dans un carter (3), la chambre de combustion ayant un axe YY, le dispositif de montage comprenant une cheminée (14) d'axe XX, une douille de bougie flottante (120) permettant une reprise de dilatation selon un axe perpendiculaire à l'axe XX de la cheminée (14), **caractérisé par le fait qu'**il comporte une douille de cheminée (130), telle que la douille de bougie (120) est logée dans la douille de cheminée (130), et des moyens d'inclinaison de ladite douille de cheminée (130) par rapport à l'axe XX, l'inclinaison de la douille de cheminée (130) permettant une inclinaison de la chambre par rapport à l'axe de la bougie.

2. Dispositif de montage d'une bougie d'allumage selon la revendication 1, **caractérisé par le fait que** les moyens d'inclinaison comportent deux barrettes (109) diamétralement opposés sur le fond de la cheminée (14) sur lesquelles repose de la douille de cheminée (130).

3. Dispositif de montage d'une bougie d'allumage selon la revendication 1, **caractérisé par le fait que** la douille de cheminée (130) comporte deux disques parallèles entre eux formant une glissière pour la douille de bougie (120).

4. Dispositif de montage selon la revendication 3, dont les deux disques sont reliés par une paroi cylindrique avec une surface extérieure en portion de sphère guidée à l'intérieur d'une paroi de la cheminée.

5. Dispositif de montage d'une bougie d'allumage selon la revendication 1, **caractérisé par le fait que** la douille de cheminée (130) est montée rotulante à l'intérieur de la cheminée (14).

6. Dispositif de montage d'une bougie d'allumage selon la revendication 1, **caractérisé par le fait qu'**il comporte des moyens de refroidissement de la bougie (13).

7. Dispositif de montage d'une bougie d'allumage selon la revendication 6, **caractérisé par le fait que** les moyens de refroidissement comportent des orifices D percés sur la cheminée (14).

8. Dispositif de montage d'une bougie d'allumage selon la revendication 6, **caractérisé par le fait que** la partie interne de la cheminée (14) est convergente pour augmenter le refroidissement de la bougie (13).

9. Système d'allumage d'un moteur à turbine à gaz, comportant au moins un dispositif de montage d'une bougie selon l'une des revendications 1 à 8.

10. Moteur à turbine à gaz, comportant un système d'allumage avec au moins un dispositif de montage de la bougie selon l'une des revendications 1 à 8.

## Claims

1. A device for mounting an igniter plug in a combustion chamber (1) of a gas turbine engine contained in a casing (3), the combustion chamber having an axis YY, the mounting device comprising a hollow shaft (14) of axis XX, a floating igniter plug sleeve (120) absorbing expansion along an axis perpendicular to the axis XX of the hollow shaft (14), **characterized by** the fact that it comprises a hollow shaft sleeve (130), such that the igniter plug sleeve (120) is housed in the hollow shaft sleeve (130), and means of inclining said hollow shaft sleeve (130) relative to the axis XX, inclining the hollow shaft sleeve (130) allowing the chamber to be inclined relative to the axis of the igniter plug.

2. The device for mounting an igniter plug as claimed in claim 1, wherein the inclining means comprise two diametrically opposed strips (109) on the bottom of the hollow shaft (14) and on which the hollow shaft sleeve (130) rests.

3. The device for mounting an igniter plug as claimed in claim 1, wherein the hollow shaft sleeve (130) comprises two mutually parallel disks forming a slideway for the igniter plug sleeve (120).

4. The mounting device as claimed in claim 3, of which the two disks are connected by a cylindrical wall with an exterior surface in the form of a portion of a sphere which is guided inside a wall of the hollow shaft.

5. The device for mounting an igniter plug as claimed in claim 1, wherein the hollow shaft sleeve (130) is mounted such that it can swivel inside the hollow shaft (14).

6. The device for mounting an igniter plug as claimed in claim 1, which comprises means of cooling the igniter plug (13).

7. The device for mounting an igniter plug as claimed in claim 6, wherein the cooling means comprise orifices D pierced in the hollow shaft (14).

8. The device for mounting an igniter plug as claimed in claim 6, wherein the internal part of the hollow shaft (14) is convergent to improve the cooling of the igniter plug (13).

9. A gas turbine engine ignition system comprising at least one device for mounting an igniter plug as claimed in one of claims 1 to 8.

10. A gas turbine engine comprising an ignition system with at least one device for mounting the igniter plug as claimed in one of claims 1 to 8.

## Patentansprüche

1. Montageanordnung einer Zündkerze in einer Brennkammer (1) eines Gasturbinenmotors, enthalten in einem Gehäuse (3), wobei die Brennkammer eine Achse YY aufweist, wobei die Montageanordnung einen Kamin (14) mit der Achse XX umfasst, wobei ein schwimmend gelagertes Zündkerzengehäuse (120) eine Dehnungsfuge entlang einer senkrechten Achse zur Achse XX des Kamins (14) ermöglicht, **dadurch gekennzeichnet, dass** sie ein Kamingehäuse (130) umfasst, sodass das Zündkerzengehäuse (120) im Kamingehäuse (130) angebracht ist, sowie Mittel zur Neigung des Kamingehäuses (130) bezüglich der Achse XX, wobei die Neigung des Kamingehäuses (130) eine Neigung der Kammer bezüglich der Achse der Kerze ermöglicht.

2. Montageanordnung einer Zündkerze nach Anspruch 1, **dadurch gekennzeichnet, dass** die Mittel zur Neigung zwei Stäbchen (109) umfassen, die am Boden des Kamins (14) diametral entgegengesetzt sind, auf denen das Kamingehäuse (130) aufliegt.

3. Montageanordnung einer Zündkerze nach Anspruch 1, **dadurch gekennzeichnet, dass** das Kamingehäuse (130) zwei parallele Scheiben umfasst, die zwischen sich einen Schieber für das Kerzengehäuse (120) bilden.

4. Montageanordnung nach Anspruch 3, wobei die zwei Scheiben durch eine zylindrische Wand mit einer Außenfläche in Kugelteil verbunden sind, die im Inneren einer Wand des Kamins geführt wird.

5. Montageanordnung einer Zündkerze nach Anspruch 1, **dadurch gekennzeichnet, dass** das Kamingehäuse (130) gelenkig im Inneren des Kamins (14) montiert ist.

6. Montageanordnung einer Zündkerze nach Anspruch 1, **dadurch gekennzeichnet, dass** sie Mittel zur Abkühlung der Kerze (13) umfasst.

7. Montageanordnung einer Zündkerze nach Anspruch 6, **dadurch gekennzeichnet, dass** die Mittel zur Abkühlung Öffnungen D umfassen, die durch den Kamin (14) gebrochen sind.

8. Montageanordnung einer Zündkerze nach Anspruch 6, **dadurch gekennzeichnet, dass** der Innenteil des Kamins (14) konvergierend ist, um die Abkühlung der Kerze (13) zu erhöhen.

9. Zündsystem eines Motors mit Gasturbine, umfassend mindestens eine Montageanordnung einer Kerze nach einem der Ansprüche 1 bis 8.

10. Gasturbinenmotor, umfassend ein Zündsystem mit mindestens einer Montageanordnung der Kerze nach einem der Ansprüche 1 bis 8.
